# EUROPEAN PATENT APPLICATION

(11) **EP 4 825 663 A1**
(43) Date of publication of application: **21.10.2026**
(21) Application number: 26172317.5
(22) Date of filing: 14.04.2026
(51) Int. Cl.: B60R 7/04

(54) **DETACHABLE CONNECTION ASSEMBLY AND INTERIOR SYSTEM**

(30) Priority: 14.04.2025 CN 202520702124 U
(71) Applicant: Faurecia Automotive Interior System (Shanghai) Co., Ltd., Shanghai 201109 (CN)
(72) Inventor: TANG, Junjie, Shanghai (CN); CHENG, Shiqi, Shanghai (CN)
(74) Representative: Pfenning, Meinig & Partner mbB

(57) **Abstract**

A detachable connection assembly (100) comprises a first housing (10) arranged on a detachable installation object (200) and a second housing (20) arranged on a fixed installation interface (300). The first housing includes a latch member (1) and a button member (2), and defines a first connection hole (11). The second housing defines a corresponding second connection hole (21). Through engagement of a plug-in portion of the latch member with the first and second connection holes, a first detachable connection structure is formed, enabling mechanical coupling between the housings.

In addition, one of the housings is provided with a male end (31) of an electrical connector, while the other carries a corresponding female end (32). These connectors engage to form a second detachable connection structure.

The cooperation of the mechanical latch-based structure and the electrical connector structure allows the first and second housings to be securely yet releasably connected, thereby enabling both mechanical attachment and electrical connection between the installation object and the installation interface.

## Description

### Field

The present disclosure relates to a detachable connection assembly and an interior system.

### Background

In vehicles, components of an interior system have personalized requirements for different vehicle models. For example, in a vehicle cabin, storage boxes of various structures may be provided for different vehicle models. With continuous increase of functions of storage boxes, storage boxes are required to have an electrical connection function to provide functions such as automatic opening and closing, lighting effects and the like.

The inventors have found that realizing the above requirements results in high cost, long development time and complex structure of the interior system.

### Summary

An object of the present disclosure is to enable an interior component of an interior system, as a detachable installation object, to be detachably installed to an installation interface through a detachable connection assembly, and to realize electrical connection. The detachable connection structure provides convenient and quick installing and removal, so that interior components of different models can be conveniently set on the same installation interface, for example, storage boxes and other components of different models can be set. Through a simple and low-cost structure, personalized requirements of interior components in a cabin and an electrical connection function are realized.

An object of the present disclosure is to provide a detachable connection assembly.

An object of the present disclosure is to provide an interior system.

A detachable connection assembly according to a first aspect of the present disclosure includes: a first housing set on a detachable installation object, the first housing being provided with a latch member and a button member, and the first housing having a first connection hole; a second housing set on a fixed installation interface, the detachable connection between the first housing and the second housing enabling detachable connection between the installation object and the installation interface, and the second housing having a second connection hole. The first connection hole and the second connection hole correspond to a plug-in portion of the latch member to form a first detachable connection structure. One of the first housing and the second housing is provided with a male end of an electrical connector, and the other is provided with a female end of the electrical connector. The male end and the female end form a second detachable connection structure, so that the first housing and the second housing are detachably connected through the first detachable connection structure and the second detachable connection structure. When the button member is pushed by an operating force, the latch member is driven by the button member to disengage the plug-in portion from the second connection hole, so that the first housing is disengaged from the second housing.

In one or more embodiments of the detachable connection assembly, a pin of the male end of the electrical connector is an elastic member, a spring is set inside the pin, and when the male end is connected to the female end to electrically connect the installation object with the installation interface, the spring is in a compressed state.

In one or more embodiments of the detachable connection assembly, the first housing is provided with a first magnet, the second housing is provided with a second magnet, the first magnet and the second magnet are magnetically connectable to form a third detachable connection structure, and the first housing and the second housing are detachably connected through the first detachable connection structure, the second detachable connection structure and the third detachable connection structure.

In one or more embodiments of the detachable connection assembly, the first housing includes a first portion and a protruding portion protruding from the first portion, the second housing includes a second portion and a recessed portion recessed from the second portion, the recessed portion and the protruding portion are in concave-convex fit, the first portion has a first annular area located at a periphery of the protruding portion, the second portion has a second annular area located at a periphery of the recessed portion, the first annular area is provided with the first magnet, and the second annular area is provided with the second magnet.

In one or more embodiments of the detachable connection assembly, the latch member has a first inclined surface, the button member has an operating surface and a second inclined surface, and when the operating surface is subjected to a pressing operating force, the button member is driven to move toward the inside of the first housing until the second inclined surface abuts against the first inclined surface, so as to drive the plug-in portion of the latch member to move toward the inside of the first housing to disengage from the second connection hole.

In one or more embodiments of the detachable connection assembly, when the operating surface is subjected to a pressing operating force, the button member is driven to move along a first direction toward the inside of the first housing, the latch member is driven to move along a second direction toward the first housing, the first direction is perpendicular to the second direction, and an inclination angle of each of the first inclined surface and the second inclined surface is substantially 45°.

In one or more embodiments of the detachable connection assembly, the latch member has a guiding hole, a guiding shaft is set in the first housing, an axial direction of the guiding shaft is the second direction, and the latch member is guided to move along the second direction through cooperation between the guiding shaft and the guiding hole.

In one or more embodiments of the detachable connection assembly, the guiding shaft is connected with a first elastic member, the button member is provided with a second elastic member, the latch member is connected with a hook member, and the second housing is provided with a fixing pin; when the latch member moves along the second direction until the plug-in portion is disengaged from the second connection hole, the first elastic member and the second elastic member are both compressed to accumulate elastic force, and the hook member moves to be hooked with the fixing pin, so that after the operating force is released, the second elastic member releases elastic force to reset the button member, the latch member is fixed by the fixing pin, and the plug-in portion remains disengaged from the second connection hole and the first connection hole; after the first housing is disengaged from the second housing along a third direction, the hook member is disengaged from the fixing pin, the first elastic member releases elastic force to reset the plug-in portion to be inserted into the first connection hole; the first direction, the second direction and the third direction are perpendicular to each other; or, the guiding shaft is connected with a first elastic member, and the button member is provided with a second elastic member; when the latch member moves along the second direction until the plug-in portion is disengaged from the second connection hole, the first elastic member and the second elastic member are both compressed to accumulate elastic force, and after the operating force is released, the second elastic member releases elastic force to reset the button member, the first elastic member also releases elastic force to reset the latch member until the plug-in portion is inserted into the second connection hole and the first connection hole.

An interior system according to a second aspect of the present disclosure includes an installation interface and an installation object, wherein the installation interface and the installation object are connected through the detachable connection assembly according to the first aspect.

In one or more embodiments of the interior system, the installation object includes a storage box, and the installation interface includes a vehicle floor.

### Description of attached drawings

The above and other features, properties and advantages of the present disclosure will become more apparent from the following description of embodiments with reference to the accompanying drawings, in which:
Fig. 1 is a schematic diagram of an interior system according to an embodiment.
Fig. 2 is a schematic diagram of an installation object corresponding to a detachable connection assembly according to an embodiment.
Fig. 3 is a structural schematic diagram of a detachable connection assembly according to an embodiment.
Figs. 4 to 6 are sectional structural schematic diagrams of detachable connection assemblies according to some embodiments.
Fig. 7 is a structural schematic diagram of a pin of a detachable connection assembly according to an embodiment.
Figs. 8 to 11 are structural schematic diagrams of a removal process of a detachable connection assembly according to an embodiment.
Figs. 12 to 14 are structural schematic diagrams of an installing process of a detachable connection assembly according to an embodiment.

### Reference Numerals:

1000 - interior system
100 - detachable connection assembly
10 - first housing
101 - first portion
102 - protruding portion
103 - first annular area
11 - first connection hole
12 - first magnet
1 - latch member
110 - plug-in portion
111 - first inclined surface
113 - guiding hole
2 - button member
211 - operating surface
212 - second inclined surface
31 - male end
311 - pin
3110 - spring
32 - female end
41 - guiding shaft
42 - first elastic member
5 - hook member
6 - fixing pin
20 - second housing
201 - second portion
202 - recessed portion
203 - second annular area
21 - second connection hole
22 - second magnet
200 - installation object
300 - installation interface

### Detailed Description of Embodiments

Hereinafter, embodiments of the technical solution of the present disclosure will be described in detail below. The following embodiments are only used to illustrate the technical solution of the present disclosure more clearly, and therefore are only used as examples, and cannot be used to limit the protection scope of the present disclosure.

Unless otherwise defined, all technical and scientific terms used herein have the same meaning as commonly understood by those skilled in the technical field of the present disclosure; the terms used herein are for the purpose of describing specific embodiments only and are not intended to limit the present disclosure; the terms "including" and "having" and any variations thereof in the description, claims and above brief description of the drawings of the present disclosure are intended to cover non-exclusive inclusion.

In the description of the embodiments of the present disclosure, the technical terms "first", "second" and the like are only used to distinguish different objects, and should not be construed as indicating or implying relative importance or implicitly indicating the number, specific order or primary-secondary relationship of the indicated technical features. In the description of the embodiments of the present disclosure, "a plurality of" means two or more, unless otherwise explicitly and specifically defined.

Reference herein to "an embodiment" means that a particular feature, structure, or characteristic described in connection with the embodiment can be included in at least one embodiment of the present disclosure. The appearances of the phrase in various places in the specification are not necessarily all referring to the same embodiment, nor are separate or alternative embodiments mutually exclusive of other embodiments. It is explicitly and implicitly understood by those skilled in the art that the embodiments described herein can be combined with other embodiments.

In the description of the embodiments of the present disclosure, the technical terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like indicate orientations or positional relationships based on those shown in the drawings, and are only for the convenience of describing the embodiments of the present disclosure and simplifying the description, but do not indicate or imply that the device or element referred to must have a specific orientation, be constructed and operated in a specific orientation, and therefore should not be construed as limiting the embodiments of the present disclosure.

In the description of the embodiments of the present disclosure, unless otherwise explicitly specified and limited, the technical terms "installed", "connected", "coupled", "fixed" and the like should be understood broadly, for example, they may be fixed connections, detachable connections, or integrated; they may be mechanical connections. For those of ordinary skill in the art, the specific meanings of the above terms in the embodiments of the present disclosure can be understood according to specific situations.

Although the detachable connection assembly disclosed in the embodiments of the present disclosure is suitable for a vehicle storage box, it is not limited thereto, and may be applied to other vehicle applications, such as railway trains, ships, airplanes and the like, as long as personalized requirements of interior components in a cabin and an electrical connection function are realized through a simple and low-cost structure.

In the following embodiments, the first direction, the second direction and the third direction are X, Y and Z directions shown in the figures, but are not limited thereto.

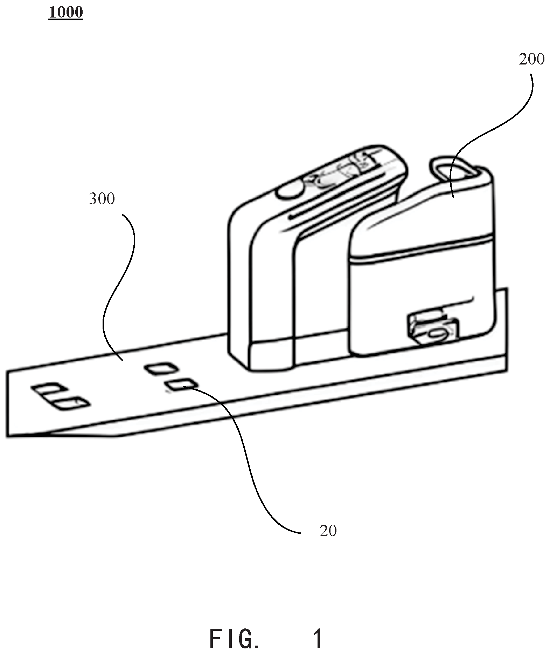

With reference to Figs. 1 to 3, an interior system 1000 includes an installation interface 300 and an installation object 200, and the installation interface 300 and the installation object 200 are connected through a detachable connection assembly 100 described in detail in the following embodiments. It can be understood that in Fig. 1, in order to show the structure of the installation interface 300 and a second housing 20 set thereon, the installation object 200 and the second housing 20 are shown in a staggered manner, and after the installation object 200 is actually assembled, the second housing 20 is generally invisible. In some embodiments, the installation object 200 includes a storage box, and the installation interface 300 includes a vehicle floor. The installation object 200 is provided with a first housing 10, and detachable connection between the installation object 200 and the installation interface 300 is realized through detachable connection between the first housing 10 and the second housing 20. Thus, through the detachable connection assembly, an interior component of the interior system, as a detachable installation object, can be detachably installed to the installation interface, and electrical connection is realized. The detachable connection structure provides convenient and quick installing and removal, so that interior components of different models can be conveniently set on the same installation interface, for example, storage boxes and other components of different models can be set. Through a simple and low-cost structure, personalized requirements of interior components in a cabin and an electrical connection function are realized.

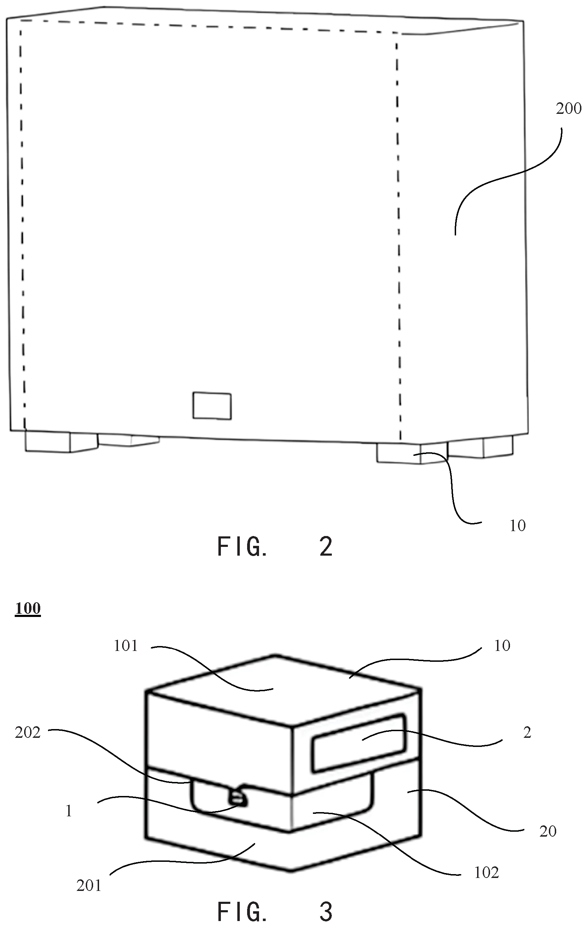

With reference to Figs. 2 to 14, in some embodiments, a detachable connection assembly 100 for a vehicle interior system includes a first housing 10 and a second housing 20.

The first housing 10 is set on a detachable installation object 200, the first housing 10 is provided with a latch member 1 and a button member 2, and the first housing 10 has a first connection hole 11.

The second housing 20 is set on a fixed installation interface 300, and detachable connection between the installation object 200 and the installation interface 300 is realized through detachable connection between the first housing 10 and the second housing 20. The second housing 20 has a second connection hole 21.

As shown in Figs. 2 to 7, in some embodiments, structures realizing detachable connection of the first housing 10 and the second housing 20 include: the first connection hole 11 and the second connection hole 21 correspond to a plug-in portion 110 of the latch member 1 to form a first detachable connection structure; one of the first housing 10 and the second housing 20 is provided with a male end 31 of an electrical connector, and the other is provided with a female end 32 of the electrical connector; the male end 31 and the female end 32 form a second detachable connection structure, so that the first housing 10 and the second housing 20 are detachably connected through the first detachable connection structure and the second detachable connection structure.

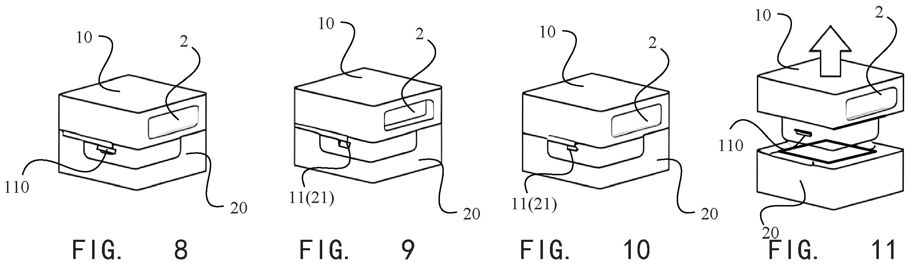

As shown in Figs. 8 to 11, when the button member 2 is pushed by an operating force, the latch member 1 is driven by the button member 2 to disengage the plug-in portion 110 from the second connection hole 21, so that the first housing 10 is disengaged from the second housing 20.

The beneficial effects are as follows: through the detachable connection assembly, an interior component of the interior system, as a detachable installation object, can be detachably installed to the installation interface, and electrical connection is realized. The detachable connection structure provides convenient and quick installing and removal, so that interior components of different models can be conveniently set on the same installation interface, for example, storage boxes and other components of different models can be set. Through a simple and low-cost structure, personalized requirements of interior components in a cabin and an electrical connection function are realized. In some embodiments, due to the latch member, the first connection hole, the second connection hole and the button member, an operator only needs to press the button to realize removal of the first housing and the installation object, and the removal operation is convenient; in addition, due to the setting of the first detachable connection structure and the second detachable connection structure, the installation structure of the installation object 200 after being installed to the installation interface 300 is stable, especially is stable under a vibration condition of a vehicle, and an electrical connection function is realized at the same time.

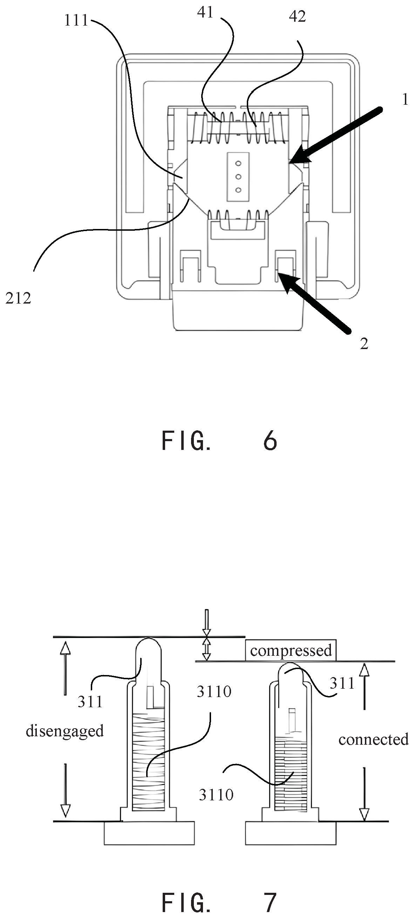

With reference to Fig. 7, in some embodiments, a structure of electrical connection is that: a pin 311 of the male end 31 of the electrical connector is an elastic member, a spring 3110 is set inside the pin 311, and when the male end 31 is connected to the female end 32 to electrically connect the installation object 200 with the installation interface 300, the spring 3110 is in a compressed state. The principle of realizing electrical connection through a pogo pin can refer to the structure of a pogo pin in the art, and will not be repeated herein. The structure of the elastic member is employed here, and the stability of the installing and fixing structure of the installation object and the installation interface can be further improved.

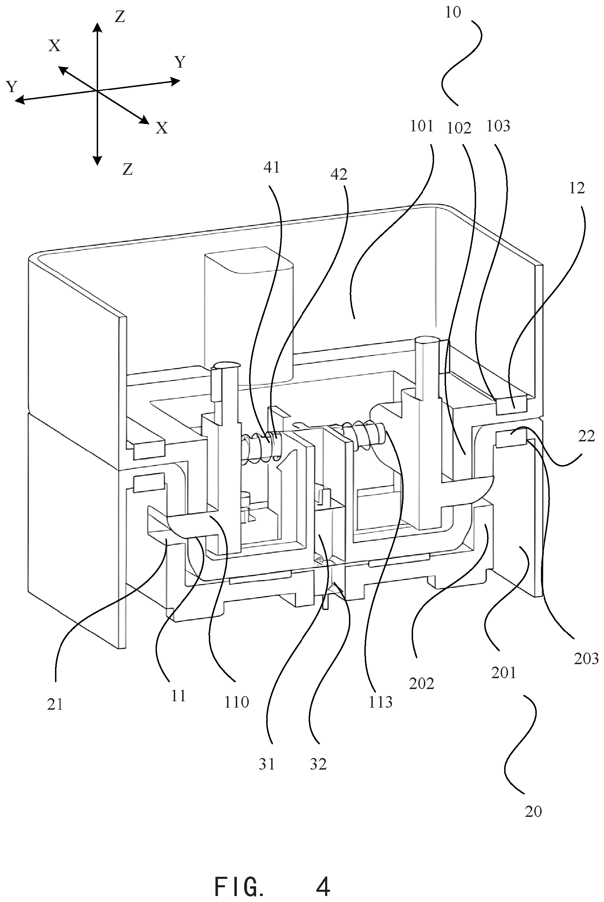

With reference to Fig. 4, in some embodiments, the structure providing detachable connection further includes a magnetic connection structure. The first housing 10 is provided with a first magnet 12, the second housing 20 is provided with a second magnet 22, the first magnet 12 and the second magnet 22 are magnetically connectable to form a third detachable connection structure, and the first housing 10 and the second housing 20 are detachably connected through the first detachable connection structure, the second detachable connection structure and the third detachable connection structure. Thus, the stability of the detachable connection structure during connection is further improved. The inventors have found that the structure is particularly suitable for occasions with large vibration conditions. In addition, the first magnet 12 and the second magnet 22 here may be permanent magnets or electromagnets. The cost is low by employing permanent magnets, and magnetic force can be automatically released by power off during removal by employing electromagnets to make removal more convenient. However, compared with permanent magnets, electromagnets need an additional control circuit, and the structure is more complex and the cost is higher.

With continued reference to Fig. 4, in some embodiments the structure for setting magnets is that: the first housing 10 includes a first portion 101 and a protruding portion 102 protruding from the first portion 101, the second housing 20 includes a second portion 201 and a recessed portion 202 recessed from the second portion 201, the recessed portion 202 and the protruding portion 102 are in concave-convex fit, the first portion 101 has a first annular area 103 located at a periphery of the protruding portion 102, the second portion 201 has a second annular area 203 located at a periphery of the recessed portion 202, the first annular area 103 is provided with the first magnet 12, and the second annular area 203 is provided with the second magnet 22. Thus, the structure is compact, and the annular setting can further improve the reliability of the magnetic structure, so as to further improve the stability of the connection between the first housing and the second housing.

As shown in Figs. 4 to 6, in some embodiments, the structure for pushing the latch member 1 through the button 2 is that: the latch member 1 has a first inclined surface 111, the button member 2 has an operating surface 211 and a second inclined surface 212, and when the operating surface 211 is subjected to a pressing operating force, the button member 2 is driven to move toward the inside of the first housing 10 until the second inclined surface 212 abuts against the first inclined surface 111, to drive the plug-in portion 110 of the latch member 1 to move toward the inside of the first housing 10 to disengage from the second connection hole 21.

In some embodiments, as shown in Fig. 6, when the operating surface 211 is subjected to a pressing operating force, the button member 2 is driven to move along a first direction (the X direction in the figure) toward the inside of the first housing 10, the latch member 1 is driven to move along a second direction (the Y direction in the figure) toward the first housing 10, the first direction is perpendicular to the second direction, and an inclination angle of each of the first inclined surface 111 and the second inclined surface 212 is substantially 45°. The substantially 45° here can be understood to include a case of allowable processing and manufacturing errors, for example, 45°±5°. The beneficial effects are as follows: the movement directions of the latch member 1 and the button member 2 are perpendicular, and spaces defined by the first housing 10 and the second housing 20 in the X direction and the Y direction are fully utilized, and the structure of the entire detachable connection assembly 100 is more compact.

With continued reference to Figs. 4 and 6, in some embodiments, the latch member 1 has a guiding hole 113, a guiding shaft 41 is set in the first housing 10, an axial direction of the guiding shaft 41 is the second direction, and the latch member 1 is guided to move along the second direction through cooperation between the guiding shaft 41 and the guiding hole 113. Thus, the movement of the latch member 1 in the X direction is more stable, and the efficiency of converting an operating force applied in the Y direction into movement of the latch member 1 in the X direction of the entire mechanism is higher, to avoid interference and collision between the latch member 1 and other components inside the first housing 10 due to deviation of the movement of the latch member 1 in the X direction, which affects the reliability of the structure.

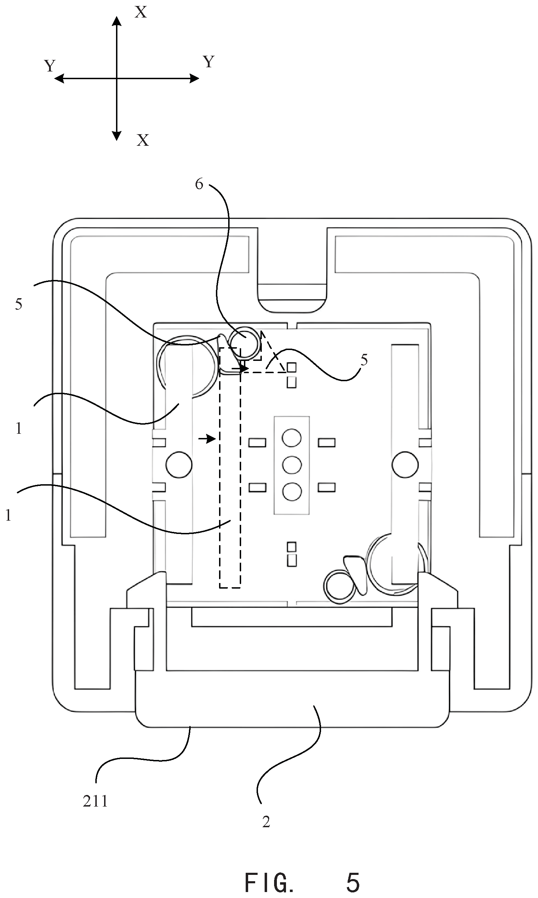

With reference to Fig. 5 and Figs. 8 to 11, in some embodiments, the guiding shaft 41 is connected with a first elastic member 42, the button member 2 is provided with a second elastic member, the latch member 1 is connected with a hook member 5, and the second housing 20 is provided with a fixing pin 6.

When the latch member 1 moves along the second direction until the plug-in portion 110 is disengaged from the second connection hole 21, the first elastic member 42 and the second elastic member are both compressed to accumulate elastic force, and the hook member 5 moves to be hooked with the fixing pin 6, as shown by a dashed line part in Fig. 5, so that after the operating force is released, the second elastic member releases elastic force to reset the button member 2, as shown in Figs. 9 to 10, the button member 2 is reset from a pressed position shown in Fig. 9 to an initial position shown in Fig. 10, the latch member 1 is fixed by the fixing pin 6, and the plug-in portion 110 remains disengaged from the second connection hole 21 and the first connection hole 11, as shown in Figs. 9 to 10, after the button member 2 is reset to the initial position, the plug-in portion 110 remains disengaged from the second connection hole 21 and the first connection hole 11.

After the first housing 10 is disengaged from the second housing 20 along a third direction, the hook member 5 is disengaged from the fixing pin 6, and the first elastic member 42 releases elastic force to reset the plug-in portion 110 to be inserted into the first connection hole 11; as shown in Figs. 10 to 11, after the first housing 10 is disengaged from the second housing 20 in the Z direction, the plug-in portion 110 is reset to a position inserted into the second connection hole 21 and the first connection hole 11.

It can be understood that, in some embodiments, with reference to Fig. 6, the guiding shaft 41 is connected with a first elastic member 42, the button member 2 is provided with a second elastic member, but the detachable connection assembly 100 is not provided with the hook member 5 connected with the latch member 1 as shown in Fig. 5, and the second housing 20 is not provided with the fixing pin 6.

In the detachable connection assembly 100 with such a structure, when the latch member 1 moves along the second direction until the plug-in portion 110 is disengaged from the second connection hole 21, the first elastic member 42 and the second elastic member are both compressed to accumulate elastic force, and after the operating force is released, the second elastic member releases elastic force to reset the button member 2, the first elastic member 42 also releases elastic force to reset the latch member 1 until the plug-in portion 110 is inserted into the second connection hole 21 and the first connection hole 11.

It can be understood that, in the embodiments shown in Fig. 6, since the hook member 5 connected with the latch member 1 is not provided and the fixing pin 6 is not provided on the second housing 20, the structure of the embodiments shown in Fig. 6 is simple and can be further downsized. Correspondingly, during a removal operation, an operator needs to keep pressing the button to prevent reset of the latch member 1. However, since the button member 2 is located at an upper part, the operator's operations of keeping pressing and disengaging the first housing 10 upward are relatively continuous, and the operation is relatively inconvenient only compared with the embodiment shown in Fig. 5.

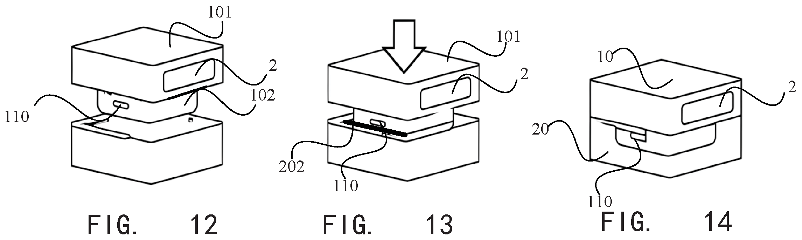

As shown in Figs. 12 to 14, when the first housing 10 is installed to the second housing 20, the first housing 10 only needs to be aligned in the Z direction and pressed down to the second housing 20. As shown in Figs. 12 to 14, the plug-in portion 110 keeps being inserted into the first connection hole 11, and during downward movement in the Z direction, an inner wall surface of the recessed portion 202 of the second housing 20 can abut against and push the plug-in portion 110 to move inward first, and then move outward to be inserted into the second connection hole 21 after being aligned with the second connection hole 21, so as to complete insertion of the first housing 10 and the second housing 20. As described above, the first direction, the second direction and the third direction are perpendicular to each other, such as X direction, Y direction and Z direction.

In summary, beneficial effects of the detachable connection assembly and the interior system employing the above embodiments include, but are not limited to: through the detachable connection assembly, an interior component of the interior system, as a detachable installation object, can be detachably installed to the installation interface, and electrical connection is realized. The detachable connection structure provides convenient and quick installing and removal, so that interior components of different models can be conveniently set on the same installation interface, for example, storage boxes and other components of different models can be set. Through a simple and low-cost structure, personalized requirements of interior components in a cabin and an electrical connection function are realized.

Although the present disclosure is disclosed as above with embodiments, it is not intended to limit the present disclosure. Any person skilled in the art can make possible changes and modifications without departing from the spirit and scope of the present disclosure. Therefore, any modification, equivalent change, and modification made to the above embodiments according to the technical essence of the present disclosure without departing from the content of the technical solution of the present disclosure shall fall within the scope defined by the claims of the present disclosure.

## Claims

1. A detachable connection assembly (100) for a vehicle interior system, **characterized in that** the detachable connection assembly (100) comprises:
a first housing (10), set on a detachable installation object (200), the first housing (10) being provided with a latch member (1) and a button member (2), and the first housing (10) having a first connection hole (11);
a second housing (20), set on a fixed installation interface (300), the detachable connection between the first housing (10) and the second housing (20) enabling detachable connection between the installation object (200) and the installation interface (300), and the second housing (20) having a second connection hole (21);
wherein the first connection hole (11) and the second connection hole (21) correspond to a plug-in portion (110) of the latch member (1) to form a first detachable connection structure; one of the first housing (10) and the second housing (20) is provided with a male end (31) of an electrical connector, and the other is provided with a female end (32) of the electrical connector; the male end (31) and the female end (32) form a second detachable connection structure, so that the first housing (10) and the second housing (20) are detachably connected through the first detachable connection structure and the second detachable connection structure;
when the button member (2) is pushed by an operating force, the latch member (1) is driven by the button member (2) to disengage the plug-in portion (110) from the second connection hole (21), so that the first housing (10) is disengaged from the second housing (20).

2. The detachable connection assembly (100) according to claim 1, **characterized in that** a pin (311) of the male end (31) of the electrical connector is an elastic member, a spring (3110) is set inside the pin (311), and when the male end (31) is connected to the female end (32) to electrically connect the installation object (200) with the installation interface (300), the spring (3110) is in a compressed state.

3. The detachable connection assembly (100) according to claim 1, **characterized in that** the first housing (10) is provided with a first magnet (12), the second housing (20) is provided with a second magnet (22), the first magnet (12) and the second magnet (22) are magnetically connectable to form a third detachable connection structure, and the first housing (10) and the second housing (20) are detachably connected through the first detachable connection structure, the second detachable connection structure and the third detachable connection structure.

4. The detachable connection assembly (100) according to claim 3, **characterized in that** the first housing (10) comprises a first portion (101) and a protruding portion (102) protruding from the first portion (101), the second housing (20) comprises a second portion (201) and a recessed portion (202) recessed from the second portion (201), the recessed portion (202) and the protruding portion (102) are in concave-convex fit, the first portion (101) has a first annular area (103) located at a periphery of the protruding portion (102), the second portion (201) has a second annular area (203) located at a periphery of the recessed portion (202), the first annular area (103) is provided with the first magnet (12), and the second annular area (203) is provided with the second magnet (22).

5. The detachable connection assembly (100) according to claim 1, **characterized in that** the latch member (1) has a first inclined surface (111), the button member (2) has an operating surface (211) and a second inclined surface (212), and when the operating surface (211) is subjected to a pressing operating force, the button member (2) is driven to move toward the inside of the first housing (10) until the second inclined surface (212) abuts against the first inclined surface (111), so as to drive the plug-in portion (110) of the latch member (1) to move toward the inside of the first housing (10) to disengage from the second connection hole (21).

6. The detachable connection assembly (100) according to claim 5, **characterized in that** when the operating surface (211) is subjected to a pressing operating force, the button member (2) is driven to move along a first direction toward the inside of the first housing (10), the latch member (1) is driven to move along a second direction toward the first housing (10), the first direction is perpendicular to the second direction, and an inclination angle of each of the first inclined surface (111) and the second inclined surface (212) is substantially 45°.

7. The detachable connection assembly (100) according to claim 6, **characterized in that** the latch member (1) has a guiding hole (113), a guiding shaft (41) is set in the first housing (10), an axial direction of the guiding shaft (41) is the second direction, and the latch member (1) is guided to move along the second direction through cooperation between the guiding shaft (41) and the guiding hole (113).

8. The detachable connection assembly (100) according to claim 7, **characterized in that**
the guiding shaft (41) is connected with a first elastic member (42), the button member (2) is provided with a second elastic member, the latch member (1) is connected with a hook member (5), and the second housing (20) is provided with a fixing pin (6); when the latch member (1) moves along the second direction until the plug-in portion (110) is disengaged from the second connection hole (21), the first elastic member (42) and the second elastic member are both compressed to accumulate elastic force, and the hook member (5) moves to be hooked with the fixing pin (6), so that after the operating force is released, the second elastic member releases elastic force to reset the button member (2), the latch member (1) is fixed by the fixing pin (6), and the plug-in portion (110) remains disengaged from the second connection hole (21) and the first connection hole (11);
after the first housing (10) is disengaged from the second housing (20) along a third direction, the hook member (5) is disengaged from the fixing pin (6), the first elastic member (42) releases elastic force to reset the plug-in portion (110) to be inserted into the first connection hole (11); the first direction, the second direction and the third direction are perpendicular to each other; or,
the guiding shaft (41) is connected with a first elastic member (42), and the button member (2) is provided with a second elastic member; when the latch member (1) moves along the second direction until the plug-in portion (110) is disengaged from the second connection hole (21), the first elastic member (42) and the second elastic member are both compressed to accumulate elastic force, and after the operating force is released, the second elastic member releases elastic force to reset the button member (2), the first elastic member (42) also releases elastic force to reset the latch member (1) until the plug-in portion (110) is inserted into the second connection hole (21) and the first connection hole (11).

9. An interior system (1000), **characterized in that** it comprises an installation interface (300) and an installation object (200), wherein the installation interface (300) and the installation object (200) are connected through the detachable connection assembly (100) according to any one of claims 1 to 8.

10. The interior system (1000) according to claim 9, **characterized in that** the installation object (200) comprises a storage box, and the installation interface (300) comprises a vehicle floor.
